# EUROPEAN PATENT APPLICATION

(11) **EP 3 361 292 A1**
(43) Date of publication of application: **15.08.2018**
(21) Application number: 16853736.3
(22) Date of filing: 07.10.2016
(51) Int. Cl.: G02B 5/02, G02F 1/19, G03B 21/60

(54) **OPTICAL SHEET, SCREEN, AND DISPLAY DEVICE**

(30) Priority: 08.10.2015 JP 2015200055
(71) Applicant: Dai Nippon Printing Co., Ltd., Tokyo, 162-8001 (JP)
(72) Inventor: KUBOTA, Shogo, Tokyo 162-8001 (JP); KURASHIGE, Makio, Tokyo 162-8001 (JP); NAKATSUGAWA, Kaori, Tokyo 162-8001 (JP)
(74) Representative: Müller-Boré & Partner Patentanwälte PartG mbB
(86) International application number: PCT/JP2016/079900
(87) International publication number: WO 2017/061585

(57) **Abstract**

To provide an optical sheet, a screen, and a display device that are capable of sufficiently reducing speckles.

An optical sheet 50 comprises: a particle layer 55 that has a first side and a second side facing each other, the particle layer 55 including a holding section 56 that includes a cavity 56a and a particle 60 that is contained in the cavity 56a and includes a first polymer section 61 and a second polymer section 62; a first base material 51 provided on the first side of the particle layer 55; a second base material 52 provided on a second side of the particle layer 55; and diffusing sections 53 and 58 provided on the second side of the particle layer 55.

## Description

### Technical Field

The present invention relates to an optical sheet, a screen that displays an image by using the optical sheet, and a display device including the screen.

### Background Art

As shown, for example, in Patent Documents 1 and 2, a projector using a coherent light source has been widely used. Typically, laser light oscillated by a laser light source is used as coherent light. When image light from a projector is formed by coherent light, a speckle is observed on a screen to which the image light is emitted. The speckle is recognized as a speckle pattern, and deteriorates displayed image quality. In Patent Document 1, an incidence angle of image light incident at each position on the screen is temporally changed. As a result, uncorrelated scattering patterns are generated on the screen, and superposed on an observation surface, so that speckles are reduced.

### Citation List

### Patent Document

Patent Document 1: WO 2012/033174
Patent Document 2: JP 2008-310260 A

### Disclosure of the Invention

### Problems to be Solved by the Invention

As another method of reducing speckles, a screen having a temporally-changing diffusion characteristic is also considered to be effective. In view of the above, Patent Document 2 proposes a screen configured of electronic paper. In the screen of Patent Document 2, reflectivity is changed in accordance with an emission position of image light emitted by raster scanning method.

By controlling the reflectivity of a section to which image light is not emitted to be low, reflection of ambient light, such as natural light and illumination light, is restricted in the area having low reflectivity, leading to possibility that a high-contrast image can be displayed.

However, in the screen disclosed in Patent Document 2, only reflectivity is changed depending on a display proportion of white particles and black particles, and there is no effect for a speckle generated on the screen. In order to effectively reduce speckles generated on a screen, it is effective to temporally change a diffusion wave surface while a diffusion characteristic of the screen is maintained as it is. There have been proposed systems, such as that a screen is directly oscillated. However, these systems have a large restriction in view of practical aspect, and are yet to be widespread.

The present invention has been made in view of the above points. The object of the present invention is to provide an optical sheet that can sufficiently reduce speckles by a method different from those conventionally used, a screen that displays an image by using the optical sheet, and a display device that includes the screen.

### Means for Solving the Problems

To achieve the above object, according to an aspect of the present invention, there is provided an optical sheet that includes a particle layer, a first base material, a second base material, and a diffusing section. The particle layer has a first side and a second side facing each other. The particle layer includes a holding section having a cavity and a particle contained in the cavity and includes a first polymer section and a second polymer section. The first base material is provided on the first side of the particle layer. The second base material is provided on the second side of the particle layer. The diffusing section is provided on the second side of the particle layer.

According to an aspect of the present invention, there is provided the optical sheet, in which the diffusing section is provided between the second base material and the particle layer.

According to an aspect of the present invention, there is provided the optical sheet, in which the diffusing section includes a diffusing fine particle that diffuses light.

According to an aspect of the present invention, there is provided an optical sheet that includes a particle layer, a first base material, and a second base material. The particle layer has a first side and a second side facing each other. The particle layer includes a holding section having a cavity and a particle contained in the cavity and includes a first polymer section and a second polymer section. The first base material is provided on the first side of the particle layer. The second base material is provided on the second side of the particle layer and diffuses light

According to an aspect of the present invention, there is provided the optical sheet, in which a single one of the particle is contained in a single one of the cavity.

According to an aspect of the present invention, there is provided a screen that includes the optical sheet, and an electrode that forms an electric field for driving the particle of the particle layer by being applied with a voltage.

According to an aspect of the present invention, there is provided a screen that includes the optical sheet, and an electrode that diffuses light. The electrode forms an electric field for driving the particle of the particle layer by being applied with a voltage.

According to an aspect of the present invention, there is provided the screen that includes a Fresnel lens that refracts incident light and emits the light as parallel light.

According to an aspect of the present invention, there is provided the screen that has a Fresnel surface and a diffuse surface provided on an opposite side of the Fresnel surface.

According to an aspect of the present invention, there is provided the screen that includes a viewing angle enlarging section that enlarges a viewing angle by diffusing and emitting incident light. The viewing angle enlarging section is formed by a trapezoidal prism in which a lower bottom longer than an upper bottom is formed on the incidence side.

According to an aspect of the present invention, there is provided the screen that includes a light absorption section that absorbs or attenuates natural light from the emission side of the viewing angle enlarging section. The light absorption section is formed to be embedded between the trapezoidal prisms.

According to an aspect of the present invention, there is provided the screen that includes a viewing angle enlarging section that enlarges a viewing angle by diffusing and emitting incident light. The viewing angle enlarging section includes a lenticular lens on which minute cylindrical lenses are arranged on the incidence side.

According to an aspect of the present invention, there is provided the screen that includes a light absorption section that absorbs or attenuates natural light from the emission side of the viewing angle enlarging section. The light absorption section is formed of a black stripe that is formed on a surface on the emission side.

According to an aspect of the present invention, there is provided the screen, in which the viewing angle enlarging section includes a microlens array in which minute convex lenses or concave lenses are arranged on the incidence side.

According to an aspect of the present invention, there is provided the screen that includes a light absorption section that absorbs or attenuates natural light from the emission side of the viewing angle enlarging section. The light absorption section is formed of a pinhole array that is formed on a surface on the emission side.

According to an aspect of the present invention, there is provided the screen that includes a light absorption section that absorbs or attenuates natural light from the emission side of the viewing angle enlarging section. The light absorption section is formed to cover the cylindrical lens or the concave lens.

According to an aspect of the present invention, there is provided the screen, in which a colored section that is semitransparent or colored is included on the emission side of the viewing angle enlarging section.

According to an aspect of the present invention, there is provided a display device that includes the screen, and a projector that emits coherent light to the screen.

According to an aspect of the present invention, there is provided the display device that includes a power source and a control device. The power source applies a voltage to the electrode of the screen. The control device controls a voltage applied to the electrode by the power source. The control device controls a voltage applied from the power source so as to move the particle in the particle layer.

### Advantages of the Invention

With an optical sheet, a screen that displays an image by using the optical sheet, and a display device including the screen according to an embodiment of the present invention, speckles can be reduced.

### Brief Description of the Drawings

FIG. 1 shows a display device of the present embodiment;
FIG. 2 shows a method of emitting light to a screen of the display device of the present embodiment;
FIG. 3 shows part of a cross section of the screen of the display device of the present embodiment;
FIG. 4 shows a movement of a particle of a particle layer of the screen of the present embodiment;
FIG. 5 shows an example of a voltage applied to the screen;
FIG. 6 shows a diffuse reflection layer of a first example of the present embodiment;
FIG. 7 shows a diffuse reflection layer of a second example of the present embodiment;
FIG. 8 shows a diffuse reflection layer of a third example of the present embodiment;
FIG. 9 shows a diffuse reflection layer of a fourth example of the present embodiment;
FIG. 10 shows a diffuse reflection layer of a fifth example of the present embodiment;
FIG. 11 shows part of a cross section of a screen of another embodiment;
FIG. 12 shows a particle of an example in which colors of a first moiety and a second moiety are made different;
FIG. 13 shows a particle of an example in which volume ratios of the first moiety and the second moiety are made different;
FIG. 14 shows a particle of an example in which a light absorption function is provided;
FIG. 15 shows an example of the screen including a plurality of wire electrode sections;
FIG. 16 shows part of a cross section of a transmission type screen of the present embodiment;
FIG. 17 shows part of a display device using the transmission type screen of the present embodiment;
FIG. 18 shows another example of a Fresnel lens;
FIG. 19 shows a second example of a viewing angle enlarging section;
FIG. 20 shows a third example of a viewing angle enlarging section;
FIG. 21 shows another example of a diffusing section; and
FIGS. 22A and 22B show a relationship between a particle and a cavity.

### Best Mode for Carrying Out the Invention

Hereinafter, explanation will be given of an optical sheet, a screen, and a display device according to the present invention with reference to the accompanying drawings.

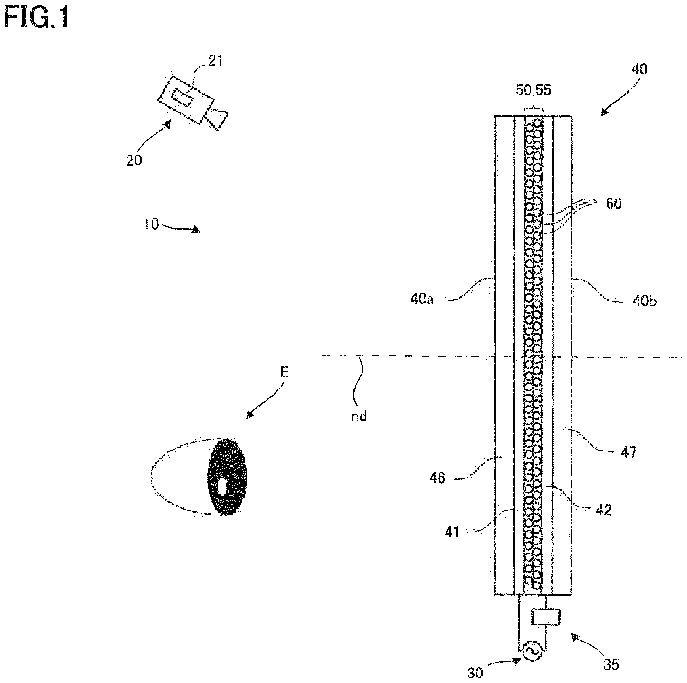

FIG. 1 shows a display device 10 of the present embodiment.

The display device 10 of the present embodiment includes a projector 20 and a screen 40 to which image light is emitted from the projector 20. As described later, the screen 40 can temporally change a diffusion characteristic with respect to incident light. In this manner, speckles can be made inconspicuous. In relation to the function of the screen 40 described above, the display device 10 includes a power source 30 and a control device 35. The power source 30 applies a voltage to the screen 40. The control device 35 controls a voltage applied from the power source 30 to control a state of the screen 40. The control device 35 may also control the operation of the projector 20. As an example, the control device 35 can be a general-purpose computer. The projector 20 may be provided internally with a control device (not shown) separate from the control device 35, and configured to be controlled by the internal control section.

The projector 20 projects light that forms an image, that is, image light, to the screen 40. In an illustrate example, the projector 20 includes a coherent light source 21 that oscillates coherent light, and a scanning device (not shown) that controls an optical path of the coherent light source 21. As an example, the coherent light source 21 is configured with a laser light source that oscillates laser light. The coherent light source 21 may include a plurality of coherent light sources that generate light in wavelength regions different from each other. For the reflection type screen 40, an observer E can observe an image reflected on the screen 40 from a first surface 40a side.

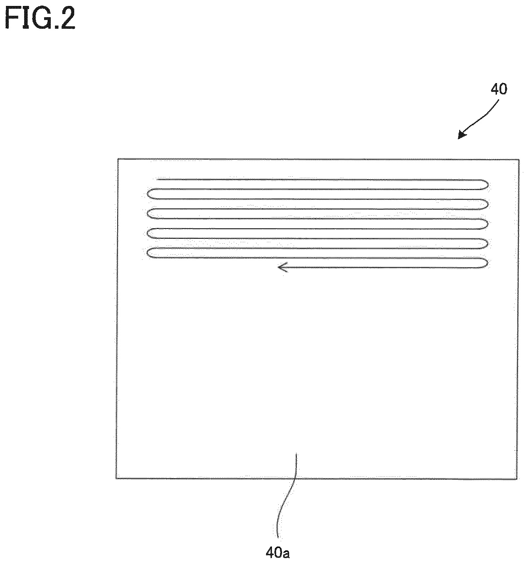

FIG. 2 shows a method of emitting light to a screen of a display device of the present embodiment.

In the illustrated example, the projector 20 projects coherent light onto the screen 40 by way of raster scanning. As shown in FIG. 2, the projector 20 projects coherent light in a manner of scanning the entire area of the screen 40. The scanning is performed at a high speed. The projector 20 stops emission of coherent light from the coherent light source 21 in accordance with an image to be formed. That is, coherent light is projected only to a position of the screen 40 at which an image is to be formed. As a result, the image is formed on the screen 40. Operation of the projector 20 is controlled by the control device 35.

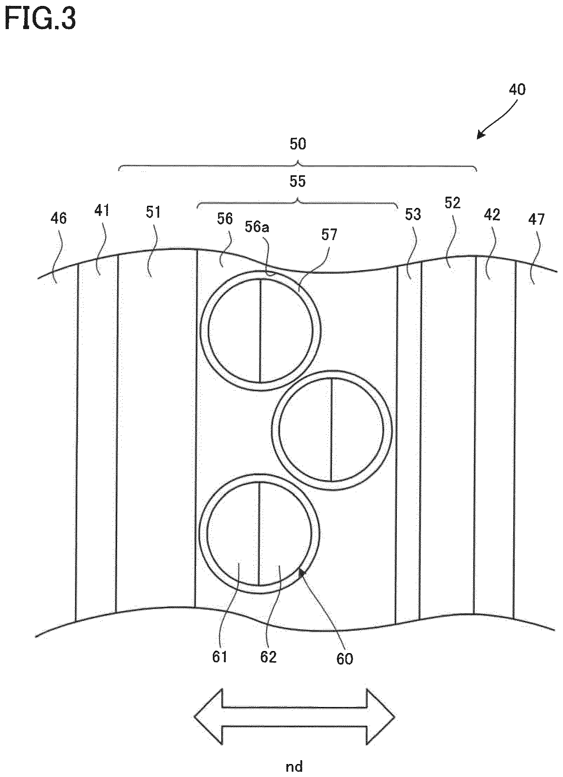

FIG. 3 shows part of a cross section of the screen 40 of the present embodiment.

First, explanation will be given of the screen 40. In the example shown in FIG. 3, the screen 40 includes an optical sheet 50 having a plurality of particles, and electrodes 41 and 42 connected to the power source 30. A first electrode 41 spreads in a sheet form on a first main surface of the optical sheet 50, and a second electrode 42 spreads in a sheet form on a second main surface of the optical sheet 50. The screen 40 shown in FIG. 3 includes a first cover layer 46 that forms a first top surface of the screen 40 by covering the first electrode 41, and a second cover layer 47 that forms a second top surface of the screen 40 by covering the second electrode 42.

The first electrode 41 and the first cover layer 46 through which the image light passes are transparent. Transmittances in a visible light region of the first electrode 41 and the first cover layer 46 are preferably 80% or higher, or more preferably 84% or higher. A visible light transmittance is specified as an average value of transmittances of wavelengths when measurement is performed within a range of measurement wavelengths of 380 nm to 780 nm by using a spectrophotometer ("UV-3100PC" manufactured by Shimadzu Corporation, conforming to JISK0115).

As a conductive material constituting the first electrode 41, indium tin oxide (ITO), indium zinc oxide (InZno), anAg nanowire, a carbon nanotube, and the like can be used. On the other hand, the first cover layer 46 is a layer for protecting the first electrode 41 and the optical sheet 50. The first cover layer 46 can be formed of transparent resin, for example, polyethylene terephthalate having excellent stability, or polycarbonate, acrylic resin, methacrylic resin, cycloolefin polymer, and the like.

The second electrode 42 can be configured in a similar manner to the first electrode 41. However, the second electrode 42 does not need to be transparent for the reflection type screen 40. Accordingly, the second electrode 42 of the reflection type screen 40 may be formed, for example, of a metal thin film of aluminum, copper, and the like. The second electrode 42 made of a metal film can also function as a reflection layer that reflects image light in the reflection type screen 40. The second cover layer 47 can be configured in a similar manner to the first cover layer 46.

The optical sheet 50 includes a first base material 51, a second base material 52, a particle layer 55 provided between the first base material 51 and the second base material 52, and a diffuse reflection layer 53 provided between the particle layer 55 and the second base material 52. The first base material 51 supports the first electrode 41, and the second base material 52 supports the second electrode 42. The particle layer 55 is sealed between the first base material 51 and the second base material 52.

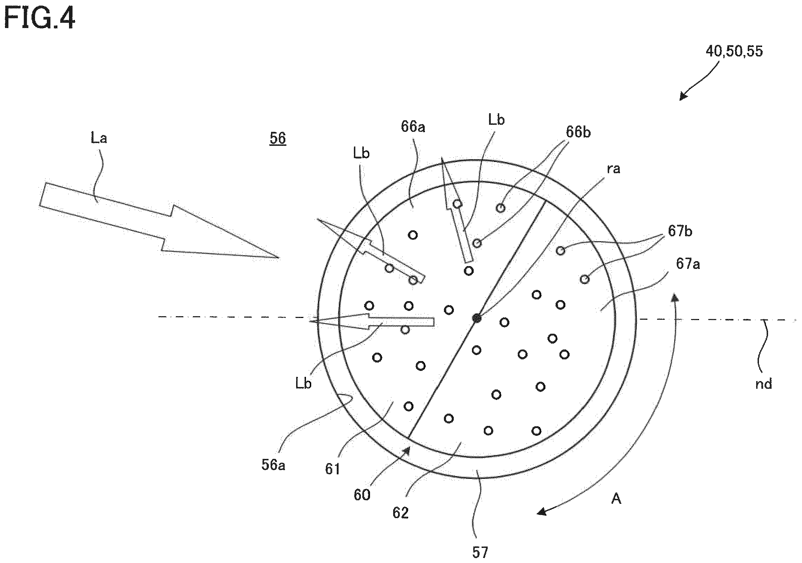

The particle layer 55 can be sealed with the first base material 51 and the second base material 52, which are configured of a material having a strength that is sufficient to function as support bodies of the first electrode 41, the second electrode 42, and the particle layer 55, such as, a polyethylene terephthalate resin film. In the example shown in FIG. 4, image light passes through the first base material 51 of the screen 40. Accordingly, is preferable that the first base material 51 is transparent and has a visible light transmittance similar to that of the first electrode 41 and the first cover layer 46.

The diffuse reflection layer 53 of the present embodiment is provided on an opposite side of the first base material 51 in a manner that at least the particle layer 55 is sandwiched between the diffuse reflection layer 53 and the first base material 51. The diffuse reflection layer 53 of a first example is provided between the second base material 52 and the particle layer 55, and has a function of diffusing and reflecting light. The diffuse reflection layer 53 preferably has a single uniform color, in particular, a white color. For easy manufacturing, the diffuse reflection layer 53 is made of a material, such as thermosetting silicone rubber, like a holding section 56.

The particle layer 55 includes a large number of particles 60, and the holding section 56 that holds the particles 60. The holding section 56 holds the particles 60 in a movable manner. As shown in FIG. 4, the holding section 56 has a large number of cavities 56a, and the particles 60 are housed in the cavities 56a. The inner dimension of each of the cavities 56a is larger than the outer dimension of the particle 60 in the cavity 56a. Accordingly, the particles 60 are movable in the cavities 56a. The holding section 56 is swollen with liquid 57. In the cavity 56a, space between the holding section 56 and the particle 60 is filled with the liquid 57. With the holding section 56 swollen with the liquid 57, a smooth movement of the particle 60 can be secured in a stable manner.

The liquid 57 is used for a smooth movement of the particles 60. The liquid 57 is held in the cavity 56a by swelling of the holding section 56. The liquid 57 is preferably low in polarity so as not to interfere with the particle 60 moving in accordance with an electric field. As the low-polarity liquid 57, there can be used a variety of materials that make a movement of the particle 60 smooth. As an example, dimethylsilicone oil, isoparaffin-based liquid, and linear alkane can be used as the liquid 57.

As an example, an elastomer sheet made of an elastomer material can be used as the holding section 56. The holding section 56 as an elastomer sheet can be swollen with the liquid 57. As an example, silicone resin, (slightly crosslinked) acrylic resin, (slightly crosslinked) styrene resin, and polyolefin resin can be used as a material of the elastomer sheet. The cavities 56a are distributed in the holding section 56 in high density in a surface direction of the screen 40.

The particles 60 have a function of changing a traveling direction of image light projected from the projector 20 shown in FIG. 1, for example, a function of diffusing, reflecting, or refracting the image light. The particles 60 include a first moiety 61 and a second moiety 62 having different dielectric constants. That is, when the particle 60 is placed in an electric field, an electric dipole moment is generated in the particle 60. At this time, the particle 60 moves toward a position at which a vector of the dipole moment faces exactly opposite a vector of the electric field.

Accordingly, when a voltage is applied between the first electrode 41 and the second electrode 42, and an electric field is generated on the optical sheet 50 positioned between the first electrode 41 and the second electrode 42, the particle 60 moves in the cavity 56a so as to have a stable attitude with respect to the electric field, that is, to be at a position and in a direction which are stable with respect to the electric field. The screen 40 changes a diffusion wave surface thereof along with a movement of the particle 60 having an optical diffusion function.

For example, the control device 35 can repeatedly rotate the particle 60 within an angular range smaller than 180° by controlling a voltage applied from the power supply 30. Accordingly, at least one of the first moiety 61 and the second moiety 62 can be selected and positioned on an observer side.

The control device 35 can also control at least one of a direction and a position of the particle 60 by a voltage applied from the power supply 30 so that the first moiety 61 of the particle 60 covers at least part of the second moiety 62 from the observer side along a normal line direction of the screen 40. Accordingly, even when the first moiety 61 and the second moiety 62 do not have strictly the same color, a change in a color tone of the screen 40 can be effectively made hardly perceivable while an image is displayed by moving the particle 60.

The particle 60 including the first moiety 61 and the second moiety 62 having different dielectric constants can be manufactured by a variety of methods including a publicly-known technique. The methods used include, for example, a method in which spherical particles of an organic or inorganic substance are arranged on a single layer by using an adhesive tape and the like, and an inorganic layer or a layer of a resin component which is charged different positively or negatively from the spherical particles is evaporated on a semispherical surface (an evaporation method; for example, refer to JP 56-067887 A), a method of using a rotating disc (for example, refer to JP 06-226875 A), a method in which two types of droplets having different dielectric constants are made in contact with each other in air by using a spraying method or an inkjet method so as to be turned into one droplet (for example, refer to JP 2003-140204 A), and a microchannel method (for example, refer to JP 2004-197083 A).

As proposed in JP 2004-197083 A, the first moiety 61 and the second moiety 62 having dielectric constants different from each other can be formed by using materials having charging characteristics different from each other. In general, a microchannel method uses a continuous phase and a particle phase which are in a mutual relationship of oil/water (O/W type) or water/oil (W/O type). Continuous phases including two types of materials having charging characteristics different from each other are sequentially discharged from a first microchannel to which continuous phases are transported into a particle phase of a fluid medium flowing through a second microchannel, so that the two-phase polymer particle 60, which is also the bipolar particle 60 having a polarity of (±) in terms of electric charge, is manufactured. The particle is not limited, in structure, to the above, and may have a phase structure of three or more phases. Accordingly, the particle 60 may be a multi-phase polymer particle having a phase structure of a plurality of phases.

In the microchannel method of the present embodiment, first, in an oil or water fluid medium containing a polymerizable resin component, a polymerizable resin component which is insoluble in the medium is phase-separated to form a continuous phase. The polymerizable resin component in the continuous phase is formed by polymerizable monomers charged positively and negatively different from each other. Next, the polymerizable monomer is transported to the first microchannel, and then continuous phases of the polymerizable monomer are sequentially discharged continuously or intermittently into a water or oil particle phase flowing through the second microchannel. Next, the substance discharged into the particle phase is turned into a particle in a series of processes of discharging, dispersion, and transportation in the microchannel, and a polymerizable resin component in the particle is polymerized and cured under UV irradiation and/or heating. In this manner, the particle 60 is prepared as appropriate.

The polymerizable resin component used for the particle 60 is considered as a monomer species that has a tendency to show a negative electrification characteristic or a positive electrification characteristic depending on a type of a functional group or a substituted group. Accordingly, when a plurality, at least two or more, of species of monomers are used as polymerizable resin components, the monomers are used as appropriate in a suitable manner, preferably by combining a plurality of monomers that tend to show an electrification characteristic of the same kind, taking into account that the monomers tend to show a positive electrification characteristic and a negative electrification characteristic. Other than the above, an additive other than monomers, such as a polymerization initiator, is added after being adjusted so that an electrification characteristic of the material as a whole is not lost.

In a polymerizable resin component having at least one type of a functional group and/or a substituted group in a molecule, the functional group or the substituted group can be considered as, for example, a carbonyl group, a vinyl group, a phenyl group, an amino group, an amide group, an imide group, a hydroxyl group, a halogen group, a sulfonate group, an epoxy group, and an urethane bond. A single one of the monomer species having the functional group or the substituted group in the polymerizable monomer, or a combination of two or more of such monomer species, can be used as appropriate in a suitable manner. As a polymerizable monomer that tends to show a negative electrification characteristic or a positive electrification characteristic, one that is proposed in JP 2004-197083 A may be used.

When the particle 60 is manufactured by the microchannel method, an external form of the particle 60, a shape of a boundary surface of the first moiety 61 and the second moiety 62 of the particle 60, and the like can be adjusted by controlling a speed at the time of confluence, a confluence direction, and the like of two types of the polymerizable resin components constituting a continuous phase, and a speed at the time of discharge of a continuous phase to a particle phase, a discharge direction, and the like.

In the example of the particle 60 shown in FIG. 3, volume ratios of the first moiety 61 and the second moiety 62 are the same. A boundary surface of the first moiety 61 and the second moiety 62 of the particle 60 is formed to be planar. That is, the particle 60 is formed to have a spherical shape, and the first moiety 61 and the second moiety 62 are formed to have a hemispherical shape.

FIG. 4 shows a particle of the particle layer of the screen of the present embodiment.

When two types of polymerizable resin components constituting a continuous phase include a diffuse component, an internal diffusion function can be imparted to the first moiety 61 and the second moiety 62 of the particle 60. As shown in FIG. 4, the first moiety 61 of the particle 60 includes a first main section 66a and a first diffuse component 66b that is dispersed in the first main section 66a. Similarly, the second moiety 62 of the particle 60 includes a second main section 67a and a second diffuse component 67b that is dispersed in the second main section 67a.

That is, the spherical particle 60 shown in FIG. 4 can express a diffusion function with respect to light that travels inside the first moiety 61 and light that travels inside the second moiety 62. The first diffuse component 66b and the second diffuse component 67b are components that may act to change a traveling direction of light by reflection, refraction, and the like with respect to light traveling through the particle 60. Such a light diffusion function of the first diffuse component 66b and the second diffuse component 67b is provided by, for example, constituting the first diffuse component 66b and the second diffuse component 67b from a material having a refractive index different from that of a material constituting the first main section 66a and the second main section 67a of the particle 60, or constituting the first diffuse component 66b and the second diffuse component 67b from a material that may function to reflect light.

As the first diffuse component 66b and the second diffuse component 67b having a refractive index different from that of a material constituting the first main section 66a and the second main section 67a, there are a resin bead, a glass bead, a metal compound, a porous substance containing gas, and the like. The first diffuse component 66b and the second diffuse component 67b may be a mere air bubble.

The particle 60 preferably has a single color. That is, the first moiety 61 and the second moiety 62 preferably have the same color. The color of the first moiety 61 and the second moiety 62 can be adjusted by adding a coloring material, such as a pigment and a dye. For the pigment and the dye, those disclosed in JP 2005-099158 A, Japanese Patent No. 2780723, Japanese Patent No. 5463911, and the like may be used.

The single color used for the particle 60 refers to a color that is uniform to the level that an observer observing the displaying side surface 40a of the reflection type screen 40 shown in FIG. 1 cannot discern a color change of the screen 40 with a normal observation power, even when the particle 60 moves in the optical sheet 50 in a state where no image is displayed on the screen 40. That is, consider a case where no image is displayed and an observer observes, with a normal attention, the first surface 40a of the screen 40 in a state where the first moiety 61 of the particle 60 faces the first surface 40a of the screen 40 and the first surface 40a of the screen 40 in a state where the second moiety 62 of the particle 60 faces the first surface 40a of the screen 40. If the observer recognizes that the colors of the first moiety 61 and the second moiety 62 are the same, the particle 60 is considered to have a single color.

Specifically, a color difference ΔE*ab (= [(ΔL*)² + (Δa*)² + (Δb*)²]^{1/2}) between the first surface 40a of the screen 40 in a state where the first moiety 61 of the particle 60 faces the first surface 40a of the screen 40 and the first surface 40a of the screen 40 in a state where the second moiety 62 of the particle 60 faces the first surface 40a of the screen 40 is preferably 1.5 or lower. The color difference ΔE*ab is a value specified based on a brightness ΔL* and chromaticities a* and b* in an L*a*b* color specification system measured by using a colorimeter (CM-700d) manufactured by Konica Minolta, Inc. conforming to JIS Z8730. When the screen 40 is a reflection type, evaluation is made based on a value of the color difference ΔE*ab specified based on the brightness ΔL* and the chromaticities a* and b* of reflected light. When the screen 40 is a transmission type, evaluation is made based on a value of the color difference ΔE*ab specified based on the brightness ΔL* and the chromaticities a* and b* of transmission light.

With the particle 60 having a single color as described above, the screen 40 when no image or the like is displayed can have a constant color. When an image is displayed on the screen 40, a change in color tone is sensed less frequently. As a result, deterioration in image quality due to a color change of the screen 40 can be effectively avoided.

The particle layer 55, the optical sheet 50, and the screen 40 are manufactured as described below as an example.

The particle layer 55 can be manufactured by a method disclosed, for example, in JP 01-028259 A. First, ink is manufactured by dispersing the particle 60 in polymerizable silicone rubber. Next, the ink is spread over a smooth base material by a coater or the like. After that, the ink is polymerized by heating, drying, and the like to be formed into a sheet. By the above process, the holding section 56 holding the particle 60 is obtained. Next, the holding section 56 is immersed in the liquid 57, such as silicone oil, for a certain period of time. After that, when the holding section 56 is swollen, a gap filled with the liquid 57 is formed between the holding section 56 formed of silicone rubber and the like and the particle 60. As a result, the cavity 56a housing the liquid 57 and the particle 60 is formed, and the particle layer 55 is manufactured.

Next, the screen 40 is manufactured by using the particle layer 55 by a manufacturing method disclosed in JP 2011-112792 A and the like. First, the particle layer 55 and the diffuse reflection layer 53 manufactured in advance are covered with a pair of the first base material 51 and the second base material 52 shown in FIG. 3, and the particle layer 55 and the diffuse reflection layer 53 are sealed by using a laminate, an adhesive, and the like. In this manner, the optical sheet 50 is obtained. Next, the first electrode 41 and the second electrode 42 are provided on the optical sheet 50, and then the first cover layer 46 and the second cover layer 47 are further laminated, so that the screen 40 is obtained.

By using the above method, the optical sheet 50 and the screen 40 of a large size can be easily manufactured.

Next, explanation will be given of a function of displaying an image by using the display device 10 shown in FIG. 1.

First, the control device 35 controls the coherent light source 21 of the projector 20 to oscillate coherent light. Light from the projector 20 is emitted to the screen 40 through an optical path adjusted by a scanning device (not shown) . The scanning device adjusts the optical path so that light scans on the screen 40 as shown in FIG. 2. However, emission of coherent light performed by the coherent light source 21 may be controlled by the control device 35. The control device 35 stops emission of coherent light from the coherent light source 21 in accordance with an image to be displayed on the screen 40. Operation of the scanning device included in the projector 20 has been accelerated to a high level that the operation cannot be analyzed by an eye E of a human. Accordingly, an observer simultaneously observes light emitted to each position on the screen 40 which is irradiated at different times. The projector 20 may be provided internally with a control device (not shown) separate from the control device 35, and controlled by the internal control section.

Light projected onto the screen 40 passes through the first cover layer 46 and the first electrode 41 and reaches the optical sheet 50. The light is diffused and reflected by the particle 60 of the optical sheet 50, and emitted in different directions on an observer side of the screen 40. Accordingly, the observer can observe reflected light from each position on the screen 40 at each position on the observer side of the screen 40. As a result, the observer can observe an image corresponding to an area to which coherent light is emitted on the screen 40.

The coherent light source 21 may also include a plurality of light sources that emit coherent light in different wavelength regions. In this case, the control device 35 controls a light source corresponding to light in each wavelength region independently of the other light sources. As a result, a color image can be displayed on the screen 40.

In general, when an image is formed on a screen by using coherent light, a speckle of a spot pattern is observed. One cause of the speckle is considered to be that coherent light typified by laser light generates an interference pattern on an optical sensor surface or a retina of a person after being diffused on the screen. In particular, when coherent light is emitted to the screen by raster scanning, the coherent light is incident on each position on the screen from a constant incidence direction. Accordingly, when raster scanning is employed, a speckle wave surface generated at each point on the screen is fixed as long as the screen does not oscillate, and, when a speckle pattern is visually recognized together with an image by an observer, image quality of a displayed image is significantly deteriorated.

On the other hand, the screen 40 of the display device 10 of the present embodiment temporally changes a diffusion wave surface. When the diffusion wave surface on the screen 40 is changed, a speckle pattern on the screen 40 is temporally changed. When a temporal change of the diffusion wave surface is made at a sufficiently high speed, speckle patterns are superposed on top of each other and averaged. In this manner, a speckle can be made inconspicuous to an observer.

As shown in FIG. 1, the screen 40 includes a pair of the first electrode 41 and the second electrode 42. The first electrode 41 and the second electrode 42 are electrically connected to the power source 30. That is, the power source 30 can apply a voltage to the first electrode 41 and the second electrode 42. When a voltage is applied between the first electrode 41 and the second electrode 42, an electric field is formed on the optical sheet 50 positioned between the first electrode 41 and the second electrode 42.

As shown in FIG. 4, the particle 60 including the first moiety 61 and the second moiety 62 having different dielectric constants are movably held in the particle layer 55 of the optical sheet 50. The particle 60 is electrified in the first place, or, when at least an electric field is formed, a dipole moment is generated. Accordingly, the particle 60 moves in accordance with a vector of a formed electric field. When the particle 60 having a function of changing a traveling direction of light, for example, a reflecting function and a diffusing function, makes a rotational movement in a direction of an arrow A shown in FIG. 4, a diffusion characteristic of the screen 40 is temporally changed. As a result, a speckle can be made inconspicuous to an observer.

An arrow La in FIG. 4 shows image light emitted from the projector 20 to the screen 40. An arrow Lb is image light diffused on the screen 40. The difference of dielectric constants observed between the first moiety 61 and the second moiety 62 of the particle 60 is sufficient if a speckle reduction function can be expressed. Accordingly, whether or not dielectric constants are different between the first moiety 61 and the second moiety 62 of the particle 60 can be determined based on whether or not the movably-held particle 60 can move along with a change in electric field vector.

The principle of the movement of the particle 60 with respect to the holding section 56 is that the direction and position of the particle 60 are changed so that an electric charge or a dipole moment of the particle 60 is in a stable positional relationship relative to an electric field vector. Accordingly, when a constant electric field is continuously applied to the particle layer 55, a movement of the particle 60 stops after the elapse of a certain period of time. On the other hand, in order to make a speckle inconspicuous, a movement of the particle 60 with respect to the holding section 56 needs to continue. In view of the above, the power source 30 applies a voltage in such a manner that an electric field formed in the particle layer 55 temporally changes. In the present embodiment, the power source 30 applies a voltage between the first electrode 41 and the second electrode 42 so as to reverse a vector of an electric field generated in the optical sheet 50.

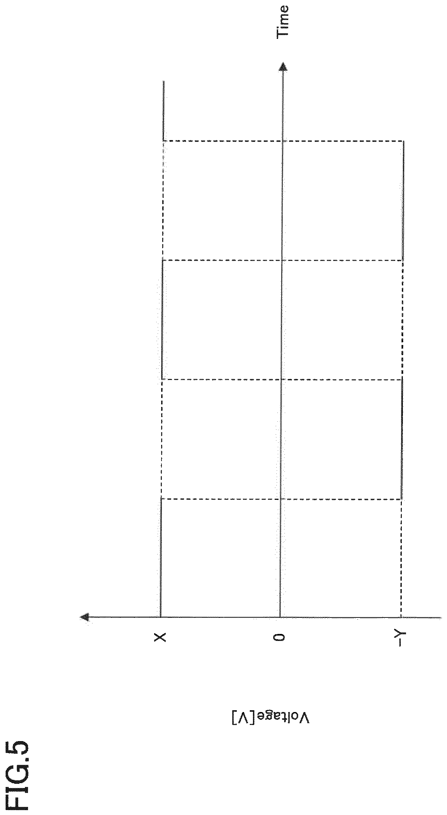

FIG. 5 shows an example of a voltage applied to the screen.

As shown in FIG. 5, X[V] and -Y[V] are alternately applied as a voltage between the first electrode 41 and the second electrode 42 of the present embodiment. The applied voltages, X[V] and -Y[V] may show the same absolute value or different absolute values. The configuration may be such that voltages of three or more different values are applied. Further, the configuration may be such that the applied voltage is continuously changed by, for example, employing a normal AC voltage.

The particle 60 is housed in the cavity 56a formed on the holding section 56. As shown in FIG. 4, the particle 60 has an external form of a substantially spherical shape. The cavity 56a that houses the particle 60 has an internal form of a substantially spherical shape. Accordingly, the particle 60 can rotationally oscillate around a rotation axis ra that extends in a direction orthogonal to the viewing surface of FIG. 4. It should be noted, however, the particle 60 can repeatedly make not only a rotational movement but also a translation movement, depending on the size of the cavity 56a housing the particle 60. Further, the cavity 56a is filled with the liquid 57. The liquid 57 allows the movement of the particle 60 smooth with respect to the holding section 56.

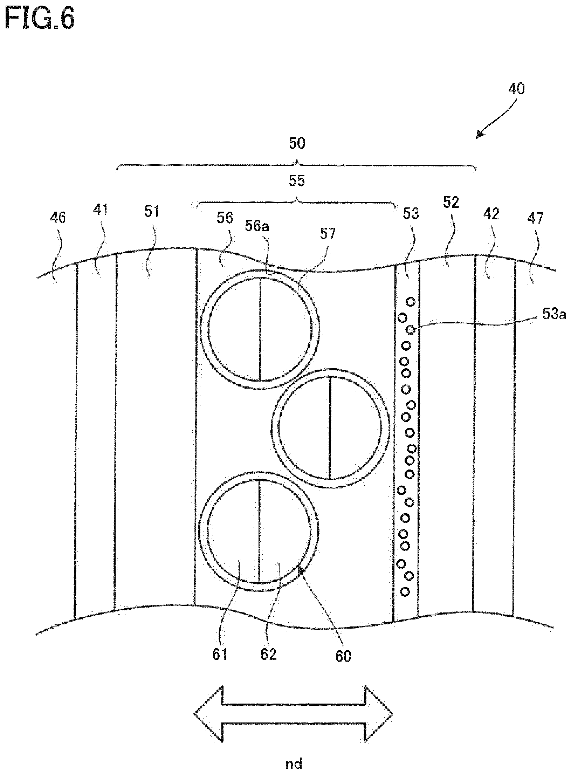

FIG. 6 shows part of a cross section of the screen of the first example of the display device of the present embodiment.

The diffuse reflection layer 53 of the first example functions to diffuse and reflect light when it contains a diffusing fine particle 53a. The diffuse reflection layer 53 is formed between the second base material 52 and the particle layer 55, exerting a function of diffusing and reflecting light. The diffuse reflection layer 53 preferably has a single uniform color, in particular, a white color. For easy manufacturing, the material of the diffuse reflection layer 53 is preferably thermosetting silicone rubber like that of the holding section 56.

The diffusing fine particle 53a has a light diffusing function similar to that of the first diffuse component 66b and the second diffuse component 67b, and may have a function of changing a traveling direction of light by reflection. A resin bead, a glass bead, a metal compound, a porous substance containing gas, and the like are used as the diffusing fine particle 53a.

When the screen 40 is to be manufactured, ink is produced by dispersing the diffusing fine particles 53a in polymerizable silicone rubber. Next, the ink is spread by a coater or the like over the holding section 56 manufactured in advance. After that, the ink is polymerized by heating, drying, and the like to be formed into a sheet. Next, the holding section 56 and the diffuse reflection layer 53 are immersed in the liquid 57, such as silicone oil, for a certain period of time. After that, when the holding section 56 is swollen, a gap filled with the liquid 57 is formed between the holding section 56 formed of silicone rubber and the like and the particle 60. As a result, the cavity 56a housing the liquid 57 and the particle 60 is formed, and the particle layer 55 and the diffuse reflection layer 53 are obtained.

Next, the particle layer 55 and the diffuse reflection layer 53 are covered with the first base material 51 and the second base material 52, and the particle layer 55 and the diffuse reflection layer 53 are sealed by using a laminate, an adhesive, and the like, and, whereby the optical sheet 50 is obtained. Next, the first electrode 41 and the second electrode 42 are provided on the optical sheet 50, and then the first cover layer 46 and the second cover layer 47 are further laminated, whereby the screen 40 is accomplished.

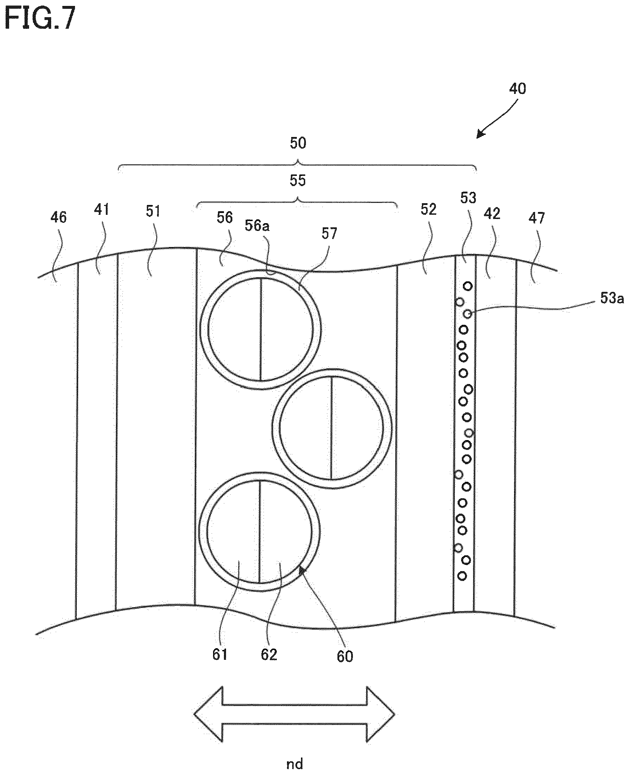

FIG. 7 shows part of a cross section of the screen of a second example of the display device of the present embodiment.

The diffuse reflection layer 53 of the second example is provided between the second base material 52 and the second electrode 42, and has a function of diffusing and reflecting light. The diffuse reflection layer 53 preferably has a single uniform color, in particular, a white color. The diffusing fine particle 53a may not necessarily be used for the diffuse reflection layer 53, as long as the diffuse reflection layer 53 has a function of diffusing and reflecting light.

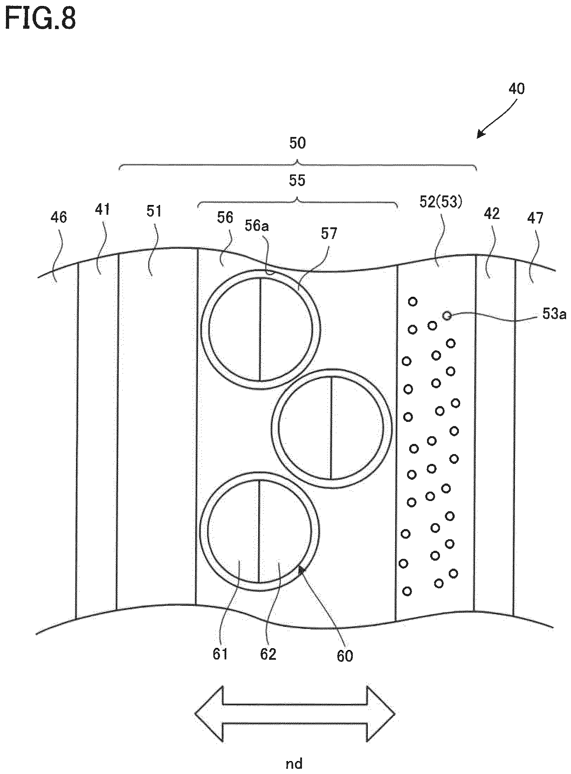

FIG. 8 shows part of a cross section of the screen of a third example of the display device of the present embodiment.

The diffuse reflection layer 53 of the third example is the second base material 52 that is given a function of diffusing and reflecting light in advance. The second base material 52 as the diffuse reflection layer 53 preferably has a single uniform color, in particular, a white color. The diffusing fine particle 53a may not necessarily be used for the second base material 52 as the diffuse reflection layer 53, as long as the second base material 52 has a function of diffusing and reflecting light.

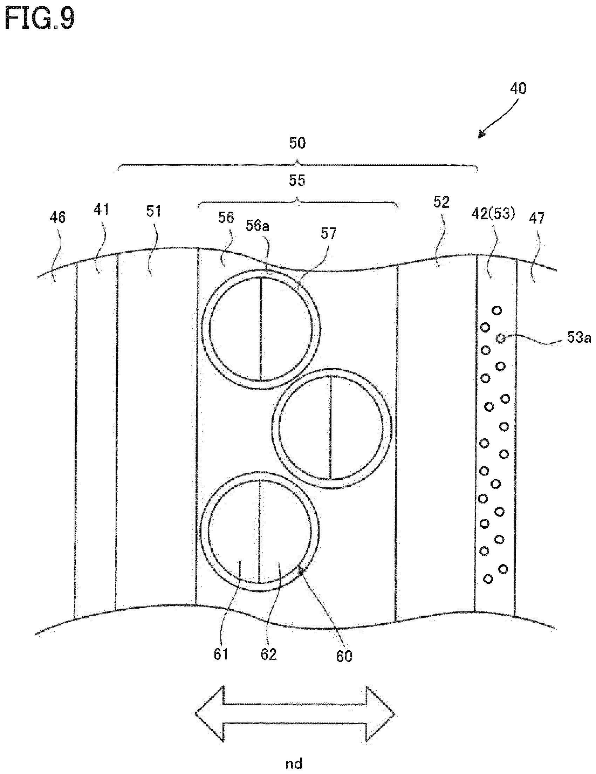

FIG. 9 shows part of a cross section of the screen of a fourth example of the display device of the present embodiment.

The diffuse reflection layer 53 of the fourth example is the second electrode 42 that is given a function of diffusing and reflecting light in advance. The second electrode 42 as the diffuse reflection layer 53 preferably has a single uniform color, in particular, a white color. The diffusing fine particle 53a may not necessarily be used for the second electrode 42 as the diffuse reflection layer 53, as long as the second electrode 42 has a function of diffusing and reflecting light.

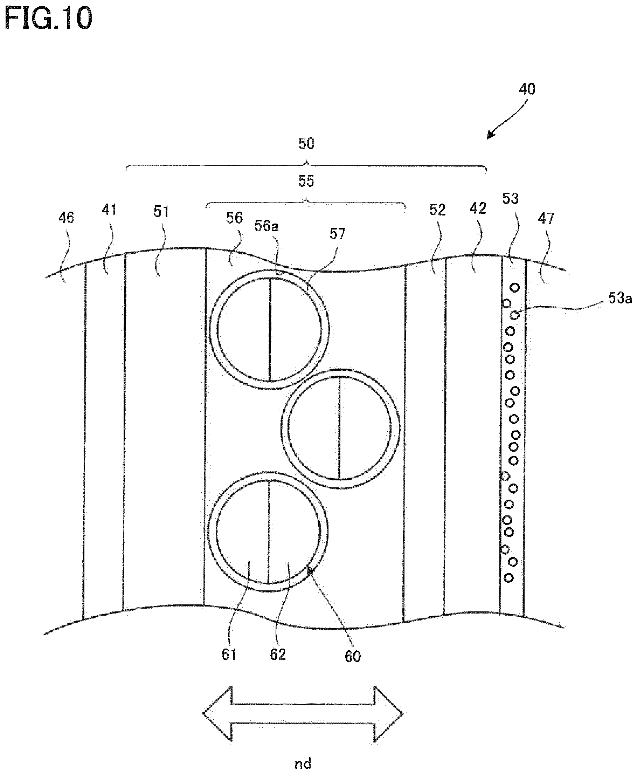

FIG. 10 shows part of a cross section of the screen of a fifth example of the display device of the present embodiment.

The diffuse reflection layer 53 of the fifth example is provided on an outer side of the second electrode 42, for example, between the second electrode 42 and the second cover layer 47, and has a function of diffusing and reflecting light. The diffuse reflection layer 53 preferably has a single uniform color, in particular, a white color. The diffusing fine particle 53a may not necessarily be used for the diffuse reflection layer 53, as long as the diffuse reflection layer 53 has a function of diffusing and reflecting light.

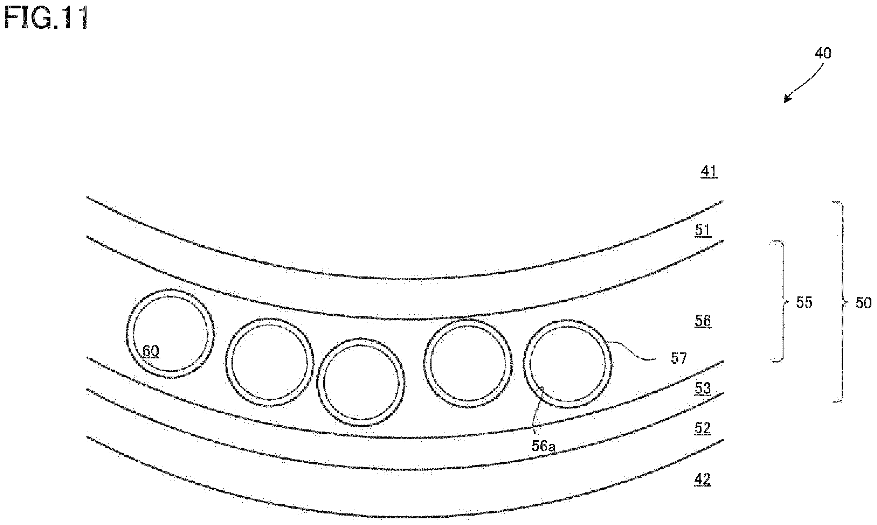

FIG. 11 shows part of a cross section of the screen 40 of another embodiment.

As shown in FIG. 11, the optical sheet 50 and the screen 40 may be manufactured to have a curved surface. To manufacture the curved surface, the sheet layer 55 may be heated on a curved surface and polymerized when the sheet layer 55 is formed into a sheet. After that, the base materials 51 and 52 which are formed to have a curved surface in advance may be laminated.

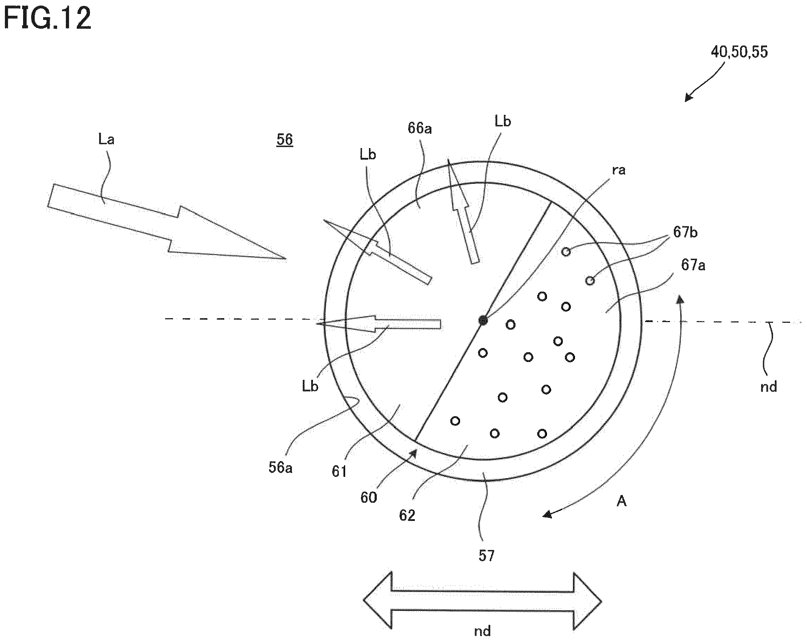

FIG. 12 shows the particle 60 in an example where colors of the first moiety 61 and the second moiety 62 are made different.

For example, although the above embodiment shows an example where the first moiety 61 and the second moiety 62 have the same color, the present invention is not limited to the example. One of the first moiety 61 and the second moiety 62 may be transparent and, if so, the particle 60 is considered to have a color of the other one that is not transparent. Accordingly, even when a direction, an attitude, and a position of the particle 60 are changed, the optical sheet 50 and the screen 40 have a constant color. Accordingly, when an image is to be displayed, deterioration in image quality due to a color change of the screen 40 can effectively be avoided.

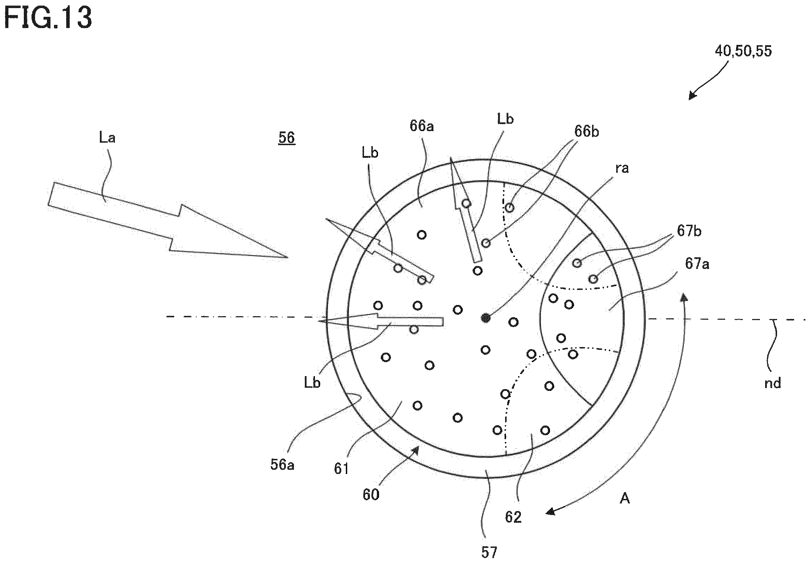

FIG. 13 shows the particle 60 in an example where volume ratios of the first moiety 61 and the second moiety 62 are made different.

Although the above embodiment shows an example where the first moiety 61 and the second moiety 62 have the same volume ratio, the present invention is not limited to the example. A volume ratio of the first moiety 61 to the particle 60 and a volume ratio of the second moiety 62 to the particle 60 may be different. In the example shown in FIG. 13, a volume ratio of the first moiety 61 is larger than a volume ratio of the second moiety 62. When such a particle 60 is used, the first moiety 61 is easily made to cover at least part of the second moiety 62 from the observer side along a normal line direction nd of the screen while light is emitted to the screen 40. When the second moiety 62 is moved to a position shown by a two-dot chain line in FIG. 13 along with a rotational movement of the particle 60, the first moiety 61 can cover the second moiety 62 completely from the observer side along the normal line direction nd of the screen 40. Accordingly, even when the first moiety 61 and the second moiety 62 do not have exactly the same color, a change in the color tone of the screen 40 can effectively be made hardly perceivable while an image is displayed by moving the particle 60.

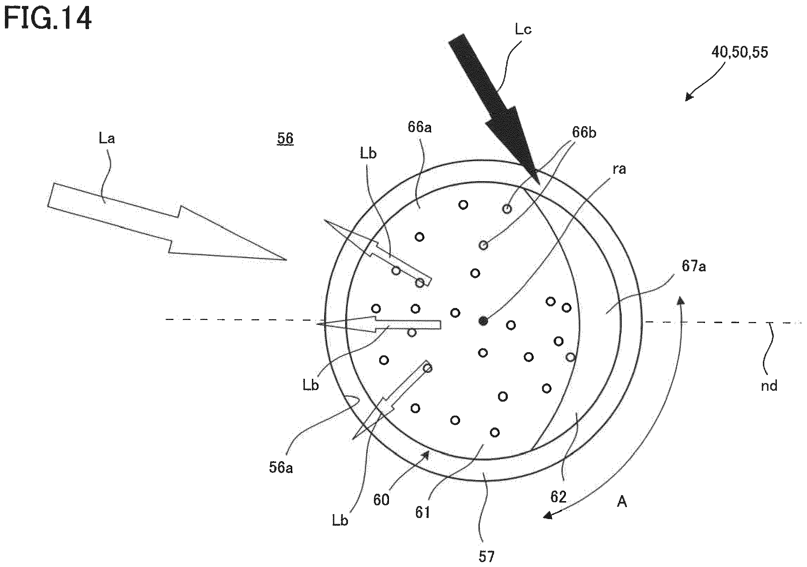

FIG. 14 shows the particle 60 in an example where the particle 60 has a light absorption function.

When a change in the color tone of the screen 40 can effectively be made hardly perceivable without receiving a large influence of a difference in color between the first moiety 61 and the second moiety 62, by controlling the driving of the particle 60, one of the first moiety 61 and the second moiety 62 may be configured to have a light absorption function. In the example shown in FIG. 14, the first moiety 61 has a light diffusion characteristic and the second moiety 62 has a light absorption function. As an example, the light absorption function of the second moiety 62 can be expressed by the second moiety 62 containing a coloring material of a light absorption characteristic, specifically a pigment, such as carbon black and titanium black. In the particle 60 shown in FIG. 14, light Lc entering from a direction different from that of the image light La from the projector 20 can be absorbed by the second moiety 62. Light absorbed by the second moiety 62 can be, for example, ambient light from an illumination device (not shown) or the like that exists in a location in which the screen 40 is installed. By selectively absorbing the light Lc other than the image light La incident on the screen 40, contrast of a displayed image can be efficiently improved without impairing brightness of the displayed image.

The above embodiment shows an example where the screen 40 is configured as a reflection type screen. However, the present invention is not limited to the example, and the screen 40 may be configured as a transmission type screen. In the transmission type screen 40, the second electrode 42, the second cover layer 47, and the second base material 52 are configured to be transparent like the first electrode 41, the first cover layer 46, and the first base material 51, and preferably have a visible light transmittance similar to that of the first electrode 41, the first cover layer 46, and the first base material 51. The size and an amount of the diffuse components 66b and 67b added to the inside of the particle 60 are also preferably adjusted so that a transmittance of light incident on the particle 60 is higher than a reflectance of the light.

The above embodiment shows an example where the particle 60 of a single color is manufactured from a monomer having a positive electrification characteristic and a monomer having a negative electrification characteristic by polymerization of synthetic resin, and the particle 60 is charged. However, the present invention need not be limited to the example. The particle 60 having a plurality of sections having different charging characteristics in the liquid 57 is synthesized by a variety of methods by using a publicly-known material. For example, the particle 60 may be manufactured by laminating two layers of plate-like bodies made of materials having different properties, and crushing the laminated body into a desired size. For a material having a charging characteristic, a charging control agent may be added to, for example, synthetic resin. As an example of a charging addition agent, there may be employed an ionic conductivity addition agent obtained by conjugating lithium perchlorate and the like with a polymer including polyalkylene glycol as a main component, which is used for an antistatic agent.

The above embodiment shows an example where the particle 60 is spherical. However, the present invention need not be limited to the example. The particle 60 may have an external form of a revolving ellipsoid, a cube, a rectangular parallelopiped, a cone, a cylindrical body, or the like, as long as the particle 60 can move in the cavity 56a. By allowing the particle 60 having an external form other than a spherical body to move, a temporal change in the diffusion characteristic of the screen 40 can be induced by surface reflection without depending on an internal diffusion function of the particle 60.

The optical sheet 50, the particle layer 55, and the particle 60 may be manufactured by a method different from the method described in the above embodiment. As long as the particle 60 is movably held in the holding section 56, the liquid 57 need not be provided.

The above embodiment shows an example of a lamination structure of the screen 40. The present invention is not limited to the example, and other function layers expected to exert a specific function may be provided on the screen 40. One function layer may exert two or more functions. For example, the first cover layer 46, the second cover layer 47, the first base material 51, the second base material 52, or the like may function as the function layer. As a function imparted to the function layer, there is, for example, a reflection prevention function, a hard coat function having excoriation resistance, an ultraviolet ray shielding function, an ultraviolet ray reflection function, or an antifouling function.

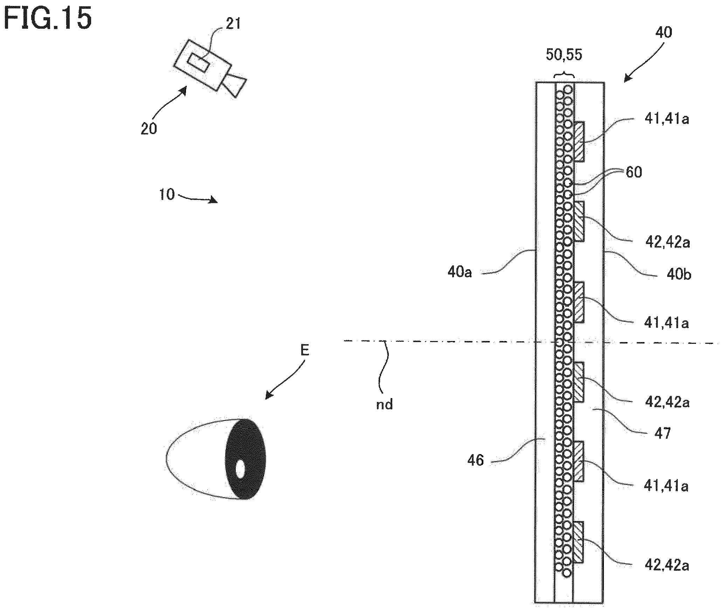

FIG. 15 shows an example of the screen 40 having a plurality of wire electrode sections.

The above embodiment shows an example where the first electrode 41 and the second electrode 42 are formed into a sheet shape, and arranged to sandwich the particle layer 55. However, the present invention need not be limited to the example. The configuration may be such that at least one of the first electrode 41 and the second electrode 42 is formed into a stripe shape. In the example shown in FIG. 15, both of the first electrode 41 and the second electrode 42 are formed into a stripe shape. That is, the first electrode 41 includes a plurality of first wire electrode sections 41a extending linearly, and the plurality of first wire electrode sections 41a are arranged in a direction orthogonal to a longitudinal direction of the first electrode 41. Like the first electrode 41, the second electrode 42 also includes a plurality of second wire electrode sections 42a extending linearly, and the plurality of second wire electrode sections 42a are arranged in a direction orthogonal to a longitudinal direction of the second electrode 42.

In the example shown in FIG. 15, both of a plurality of the first wire electrode sections 41a constituting the first electrode 41 and a plurality of the second wire electrode sections 42a constituting the second electrode 42 are disposed on a surface opposite an observer of the optical sheet 50. A plurality of the first wire electrode sections 41a constituting the first electrode 41 and a plurality of the second wire electrode sections 42a constituting the second electrode 42 are arranged alternately along the same arranging direction. The first electrode 41 and the second electrode 42 shown in FIG. 15 can also form an electric field on the particle layer 55 of the optical sheet 50 with a voltage applied from the power source 30.

The above embodiment describes an example in which the projector 20 projects light to the screen 40 by way of raster scanning. The present invention need not be limited to the example. The projector may project image light using a method other than the raster scanning method, for example, a method in which the projector projects image light to an entire area of the screen at each moment. Even if such a projector is used, a speckle is unavoidably generated. However, by using the screen described above, a diffusion wave surface temporally changes on the screen 40, so that the speckle can be effectively made inconspicuous. The screen described above can also be used in combination with a projector disclosed in International Publication No. 2012/033174 described in the section of Background Art. Although speckles can be reduced effectively with the projector, they can be made inconspicuous more effectively with the combination of the projector and the screen described above.

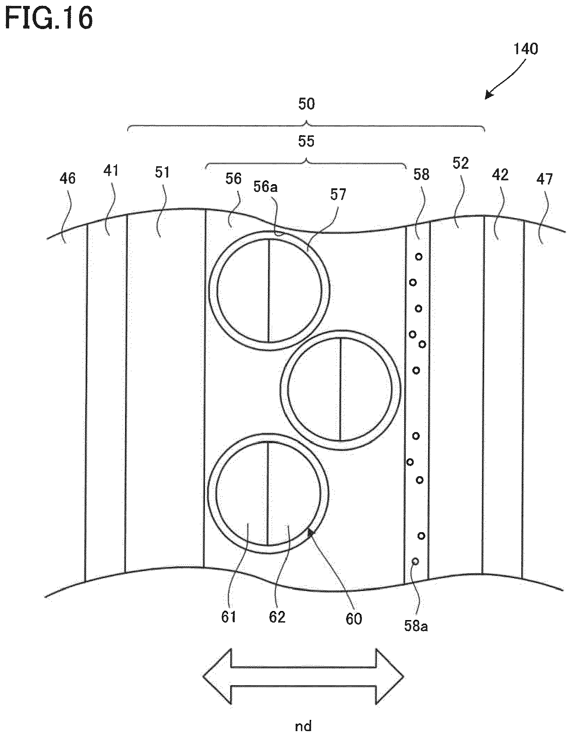

FIG. 16 shows part of a cross section of a transmission type screen 140 of the present embodiment.

The transmission type screen 140 uses the diffuse transmission layer 58 in place of the diffuse reflection layer 53 in the optical sheet 50 of the reflection type screen 40 shown in FIG. 3. The diffuse transmission layer 58 has a function of diffusing light that passes through the layer 58. The other configurations of the transmission type screen 140 may be similar to those of the reflection type screen 40 shown in FIG. 3. The transmission type screen 140 may use the diffuse transmission layer 58 in place of the diffuse reflection layer 53 in the optical sheet 50 of the reflection type screen 40 shown in FIGS. 6 to 9. A diffusing particle 58b (not shown) may be included in the holding section 56 and the liquid 57 of the particle layer 55.

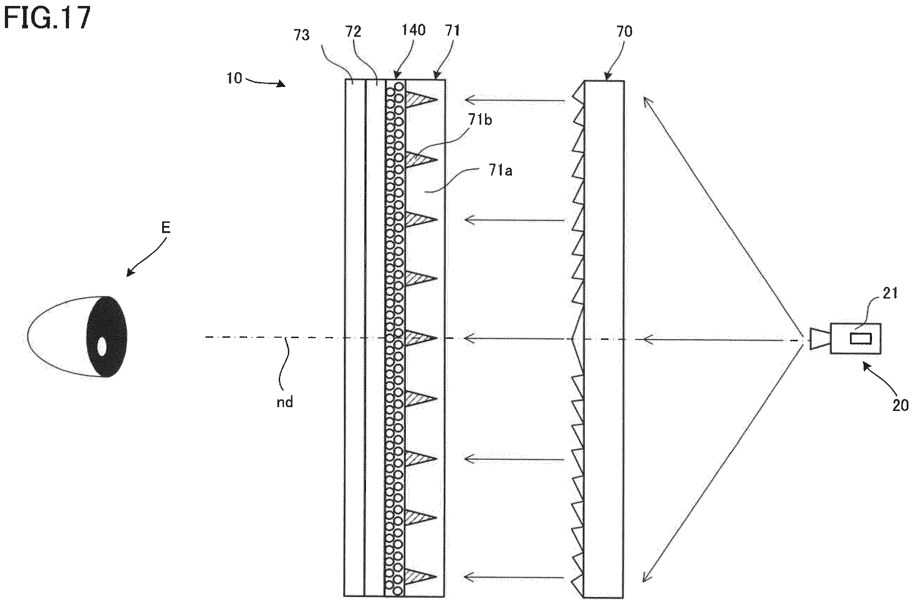

FIG. 17 shows an example of the display device 10 using the transmission type screen 140 of the present embodiment.

The transmission type display device 10 of the present embodiment includes the projector 20, and the screen 140 to which image light is emitted from the projector 20. The screen 140 only needs to include at least the electrodes 41 and 42, the particle layer 55, and the diffuse transmission layer 58 among the configurations shown in FIG. 16.

The configuration may be such that the display device 10 uses at least one of a Fresnel lens 70 disposed between the projector 20 and the screen 140, a viewing angle enlarging section 71 that enlarges a viewing angle of the screen 140, and a colored section 72 that improves contrast. In order to improve durability of the screen 140, a hard coat section 73 may also be used.

The Fresnel lens 70 refracts light emitted from the projector 20 and emits the light as substantially parallel light. The Fresnel lens 70 is disposed between the projector 20 and the screen 140. The Fresnel lens 70 may be either one of a concentric Fresnel lens and a linear Fresnel lens having an effect similar to that of a cylindrical lens. A Fresnel surface 70a of the Fresnel lens 70 may face either one of the projector 20 and the screen 140. The Fresnel lens 70 may be formed into a sheet shape.

By using the Fresnel lens 70, light emitted from the projector 20 can be emitted as substantially parallel light, and image quality on the screen 140 can be improved. By forming the Fresnel lens 70 into a sheet shape, the screen 140 can be formed to be thin.

The viewing angle enlarging section 71 enlarges a viewing angle of the screen 140. In a first example shown in FIG. 17, the viewing angle enlarging section 71 includes a base material 71a, such as transparent resin or air, and a light absorption section 71b formed into a black triangular prism shape in the base material 71a. The base material 71a is formed by a trapezoidal prism in which an upper base is formed on an emission side and a lower base longer than the upper base is formed on an incidence side. The trapezoidal prisms may be formed continuously and integrally, or separately. The base material 71a has a refractive index higher than that of the light absorption section 71b.

Light emitted from the projector 20 enters the viewing angle enlarging section 71 from the base material 71a side, and is totally reflected on an inclined surface at the boundary between the base material 71a and the light absorption section 71b, so that the viewing angle is enlarged. Accordingly, most light does not enter the light absorption section 71b and, hence, the use efficiency of light can be improved. The light absorption section 71b absorbs natural light from the observer E side. Accordingly, contrast can be improved.

In the viewing angle enlarging section 71 shown in FIG. 17, the light absorption sections 71b are aligned in a vertical direction on the viewing surface of the drawing so that light is diffused in the vertical direction. However, the light absorption sections 71b may also be aligned in a direction from the front side to a deeper side on the viewing surface of the drawing so that light is diffused in a horizontal direction. Alternatively, the visual field enlarging section 71 including the light absorption sections 71b aligned in a vertical direction on the viewing surface of the drawing and the visual field enlarging section 71 including the light absorption sections 71b aligned in a direction from the front to the deeper side on the viewing surface of the drawing may be superposed on top of each other between the projector 20 and the observer E. By superposing the visual field enlarging sections 71 on top of each other, a screen of a wide viewing angle with high contrast can be implemented efficiently without lowering the use efficiency of light.

The colored section 72 is a layer which is semitransparent or colored with a coloring dye and the like, and lowers the transmittance to improve contrast. The configuration may be such that the colored layer 72 is not provided as an independent layer and other sections have a function similar to that of the colored layer 72. For example, the holding section 56, the liquid 57, and the particle 60 may be colored to improve contrast. When a laser is used as a light source, the colored section 72 may be colored so as to allow only a bright line to pass through.

The hard coat layer 73 is formed by coating the top layer of the screen with a publicly-known hard coat material, and improves the durability thereof. The hard coat layer 73 may have a water permeability or water repellent characteristic. For example, when the screen 140 is used in a low temperature environment, condensation may be generated on the hard coat layer 73. For this reason, a surface of the hard coat layer 73 may be formed by coating with fluorine, silicon, or the like, an uneven structure, adhering a moisture absorption layer, an electric heat layer, or the like. By forming the surface of the hard coat layer 73 in any one of the above manners, condensation and a stain can be prevented.

The display device 10 may be implemented with a touch panel function. In an infrared optical imaging system, when an infrared sensor is provided in part of the display device 10 and an infrared ray is emitted from the outside, a position at which the infrared ray is in contact with the display device 10 is detected by the infrared sensor as a region in which infrared radiation is shielded. A touch panel function is therefore exerted. An infrared ray irradiation section may be provided separately with an irradiation device. Similarly, in an ultrasonic wave method, a transmitting element and a receiving element of an ultrasonic surface acoustic wave are installed on a surface of the display device 10, and a contact position is specified based on attenuation of the acoustic wave. A touch panel based on electrostatic capacity or membrane resistance system may be mounted inside the display device 10 or externally. To mount a touch panel in the inside of the display device, a touch panel layer may be formed between the screen 140 and the colored section 72 shown in FIG. 17, or between the colored section 72 and the hard coat layer 73.

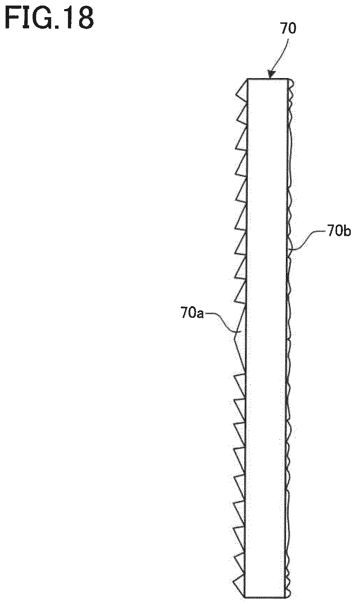

FIG. 18 shows another example of the Fresnel lens 70.

In the Fresnel lens 70, a surface opposite the Fresnel surface 70 may be formed as a diffuse surface 70b having diffusibility. The diffuse surface 70b may have irregularities and the like formed on the surface. By forming the diffuse surface 70b described above, diffusibility of the entire screen can be improved.

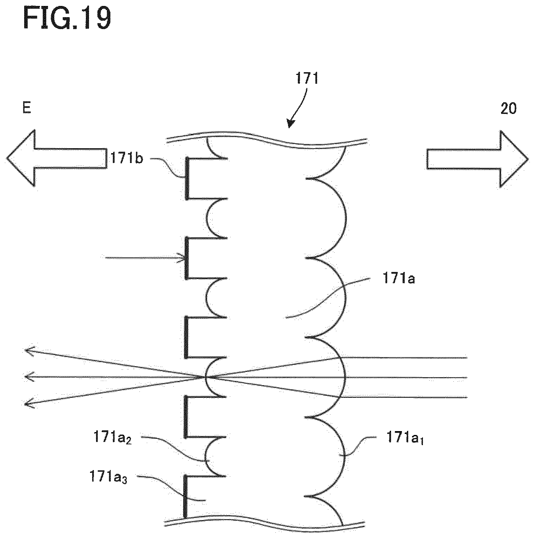

FIG. 19 shows a second example of the viewing angle enlarging section.

A viewing angle enlarging section 171 of the second example shown in FIG. 19 includes a lenticular lens 171a as a base material and a light absorption section 171b formed in part of the lenticular lens 171a.

On the lenticular lens 171a, minute and elongated first cylindrical lenses 171a₁ are aligned on the surface on the projector 20 side, and minute and elongated second cylindrical lenses 171a₂ and flat surface sections 171a₃ are formed alternately on the surface on the observer E side. The light absorption section 171b is formed on the flat surface sections 171a₃ of the lenticular lens 171a. The lenticular lens 171a is formed by transparent resin. The light absorption section 171b is formed by black coating and the like.

Light emitted from the projector 20 enters the first cylindrical lens 171a₁ of the lenticular lens 171a of the visual field enlarging section 171, and exits from the second cylindrical lens 171a₂ to enlarge a viewing angle. Accordingly, most light does not enter the light absorption section 171b and, hence, the use efficiency of light can be improved. The light absorption section 171b also absorbs natural light from the observer E side. Accordingly, contrast can be improved.

In the viewing angle enlarging section 71 shown in FIG. 19, the first cylindrical lenses 171a₁ and the second cylindrical lenses 171a₂ are aligned in a vertical direction on the viewing surface of the drawing so that light is diffused in the vertical direction. Alternatively, the first cylindrical lenses 171a₁ and the second cylindrical lenses 171a₂ may be aligned in a direction from the front to the deeper side on the viewing surface of the drawing so that light is diffused in a horizontal direction. Alternatively, the visual field enlarging section 171 including the first cylindrical lenses 171a₁ and the second cylindrical lenses 171a₂ aligned in a vertical direction on the viewing surface of the drawing and the visual field enlarging section 171 including the first cylindrical lenses 171a₁ and the second cylindrical lenses 171a₂ aligned in a direction from the front to the deeper side on the viewing surface of the drawing may be superposed on top of each other between the projector 20 and the observer E. By superposing the visual field enlarging sections 171 on top of each other, a screen of a wide viewing angle with high contrast can be implemented efficiently without lowering the use efficiency of light.

The viewing angle enlarging section 71 may be a microlens array or the like. The light absorption section 171b may be a pinhole array or the like.

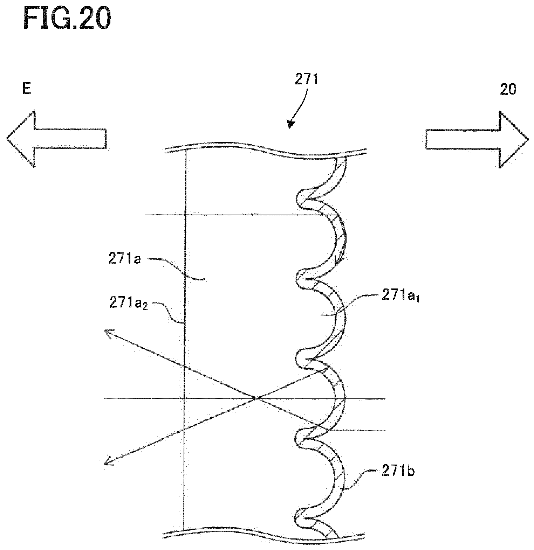

FIG. 20 shows a third example of the viewing angle enlarging section.

A viewing angle enlarging section 271 of the third example shown in FIG. 20 incudes a lenticular lens 271a as a base material and a light absorption section 271b formed in part of the lenticular lens 271a.

On the lenticular lens 271a, minute and elongated cylindrical lenses 271a₁ are aligned on the surface on the projector 20 side, and a flat surface section 271a₂ is formed on the surface on the observer E side. The lenticular lens 271a is formed of transparent resin. The light absorption section 271b is formed to cover the cylindrical lens 271a₁ of the lenticular lens 271a. The light absorption section 271b is formed in a layer by coating and the like.

Light emitted from the projector 20 enters the light absorption section 271b of the visual field enlarging section 271, and exits from the flat surface section 271a₂ to enlarge a viewing angle. The light absorption section 271b repeats internal reflection, and attenuates natural light from the observer E side. Accordingly, contrast can be improved.

In the viewing angle enlarging section 71 shown in FIG. 20, the cylindrical lenses 271a₁ are aligned in a vertical direction on the viewing surface of the drawing so that light is diffused in the vertical direction. Alternatively, the cylindrical lenses 271a₁ may be aligned in a direction from the front to the deeper side on the viewing surface of the drawing so that light is diffused in a horizontal direction. Alternatively, the visual field enlarging section 271 including the cylindrical lenses 271a₁ aligned in a vertical direction on the viewing surface of the drawing and the visual field enlarging section 271 including the cylindrical lenses 171a₁ aligned in a direction from the front to the deeper side on the viewing surface of the drawing may be superposed on top of each other between the projector 20 and the observer E. By superposing the visual field enlarging sections 271 on top of each other, a screen of a wide viewing angle with high contrast can be implemented efficiently without lowering the use efficiency of light.

The viewing angle enlarging section 71 may be a microlens array or the like.

Next, explanation will be given further of the diffusing sections 53 and 58 of a reflection type and a transmission type of the present embodiment. In connection with the diffusing sections 53 and 58 of the present embodiment, as shown in FIG. 3, the diffusing reflection layer 53 is used for the reflection type screen 40 and the diffusing transmission layer 58 is used for the transmission type screen 140. The diffusing sections 53 and 58, for both of the diffusing reflection layer 53 and the diffusing transmission layer 58, only need to have a function of diffusing light when containing the diffusing fine particles 53a and 58a as shown in FIGS. 6 and 16.

For the diffusing reflection layer 53, a metal compound, such as titanium oxide, having a large refractive index difference from a main component, such as acrylic resin, may be used for the diffusing fine particle 53a. The diffusing fine particle 53a having a large refractive index difference from the main component is preferably used as a reflection type, since back-scattering occurs more frequently.

For the diffusing transmission layer 58, a resin bead or a material, such as silicon dioxide, having a small refractive index difference from a main component, such as acrylic resin, may be used for the diffusing fine particle 58a. The diffusing fine particle 58a having a small refractive index difference from the main component is preferably used as a transmission type, since forward scattering occurs more frequently.

As shown in FIG. 7, the diffusing sections 53 and 58 may be separated from the particle layer 55. An air layer may be provided between the diffusing sections 53 and 58 and the particle layer 55. The diffusing sections 53 and 58 may be provided on both sides of the particle layer 55.

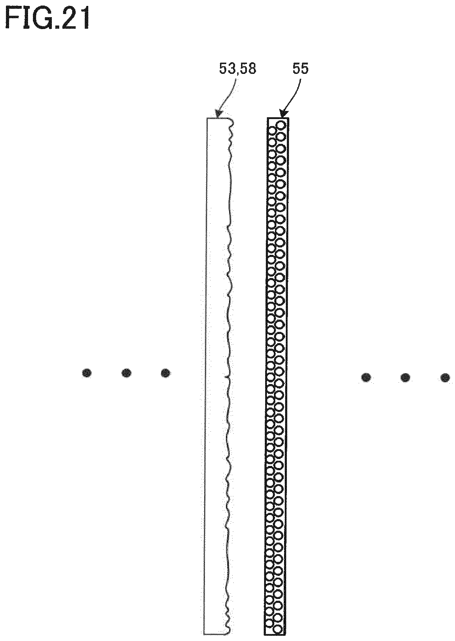

FIG. 21 shows another example of the diffusing sections 53 and 58.

The diffusing sections 53 and 58 may be used as the diffusing reflection layer 53 and the diffusing transmission layer 58 by forming irregular concave and convex on the surface thereof. In this case, the concave and convex of the diffusing sections 53 and 58 may be formed on the particle layer 55 side. As shown in FIG. 21, the diffusing sections 53 and 58 may be separated from the particle layer 55. An air layer may be provided between the diffusing sections 53 and 58 and the particle layer 55. The diffusing sections 53 and 58 may be provided on both sides of the particle layer 55.

Next, explanation will be given further of the particle 60. As shown in FIG. 4, in the present embodiment, the particle 60 is a multi-phase polymer particle, and includes the first moiety 61 and the second moiety 62. The first moiety 61 and the second moiety 62 may be reworded as the first polymer section 61 and the second polymer section 62.

For the reflection type particle 60, acrylic resin or the like may be used for the first main section 66a and the second main section 67a of the particle 60, and a metal compound, such as titanium oxide, having a large refractive index difference from the first main section 66a and the second main section 67a may be used for the first diffuse component 66b and the second diffuse component 67b. The first main section 66a and the second main section 67a, and the first diffuse component 66b and the second diffuse component 67b, which have a large refractive index difference from each other, are preferably used as a reflection type, since back-scattering occurs more frequently.

In the transmission type particle 60, acrylic resin and the like may be used for the first main section 66a and the second main section 67a of the particle 60, and a material, such as silicon dioxide, having a small refractive index difference from the first main section 66a and the second main section 67a may be used for the first diffuse component 66b and the second diffuse component 67b. The first main section 66a and the second main section 67a, and the first diffuse component 66b and the second diffuse component 67b, which have a small refractive index difference from each other, are preferably used as a transmission type, since forward scattering occurs more frequently.

In the particle layer 55, the holding section 56, the liquid 57, and the particle 60 may be colored by a coloring agent.

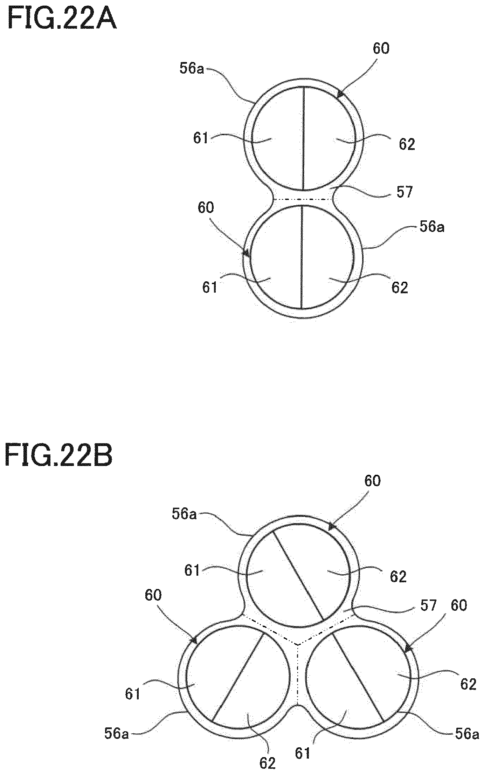

FIG. 22 shows a relationship between the particle 60 and the cavity 56a.

In the present embodiment, a single one of the particles 60 is contained in a single cavity 56a. The cavity 56a across which the particle 60 cannot move is considered as one unit. Accordingly, in the example shown in FIG. 22A, the particle 60 is contained in each of two cavities 60a. In the example shown in FIG. 22B, the particle 60 is contained in each of three cavities 60a. That is, a single one of the particles 60 is contained in a single cavity 56a.

In the present embodiment, transparent refers to that a transmittance is above a reflectance in any of wavelengths in a visible light region, where the transmittance and the reflectance are measured by microspectroscopy for a slice prepared by using a microtome.

According to an example of the optical sheet 50 of the present embodiment described above, the optical sheet 50 includes the particle layer 55, the first base material 51, the second base material 52, and the diffusing sections 53 and 58. The particle layer 55 includes a first side and a second side facing each other. The particle layer 55 includes the holding section 56 having a cavity, and the particle 60 contained in the cavity 56a and including the first moiety 61 and the second moiety 62. The first base material 51 is provided on the first side of the particle layer 55. The second base material 52 is provided on the second side of the particle layer 55. The diffusing sections 53 and 58 are provided on the second side of the particle layer 55. Accordingly, light that enters the optical sheet 50 can be diffused appropriately, and speckles can be reduced sufficiently.

According to an example of the optical sheet 50 of the present invention, the diffusing sections 53 and 58 are provided between the second base material 52 and the particle layer 55. With the diffusing sections 53 and 58 provided adjacent to the particle layer 55, light that enters the optical sheet 50 can be diffused and reflected efficiently.

According to an example of the optical sheet 50 of the present embodiment, the diffusing sections 53 and 58 include the diffusing fine particles 53a and 58a that diffuse light. Accordingly, light that enters the optical sheet 50 can be diffused and reflected efficiently.

According to an example of the optical sheet 50 of the present embodiment described above, the optical sheet 50 includes the particle layer 55, the first base material 51, and the second base material 52. The particle layer 55 has a first side and a second side facing each other, and includes the holding section 56 having the cavity 56a and the particle 60 contained in the cavity 56a and including the first polymer section 61 and the second polymer section 62. The first base material 51 is provided on the first side of the particle layer 55. The second base material 52 is provided on the second side of the particle layer 55 and diffuses light. Accordingly, light that enters the optical sheet 50 can be diffused appropriately, and speckles can be reduced sufficiently.

According to an example of the optical sheet 50 of the present embodiment, the second base material 52 includes the diffusing fine particle 53a that diffuses light. Accordingly, the diffusing sections 53 and 58 need not be additionally provided, and the optical sheet 50 can be configured as a thin film.

According to an example of the optical sheet 50 of the present embodiment, a single one of the particles 60 is contained in a single cavity 56a. Accordingly, the particle 60 can be moved smoothly in the cavity 56a.

According to an example of the screen 40 of the present embodiment, the screen 40 includes the optical sheet 50 and the electrodes 41 and 42 that form an electric field for driving the particle 60 of the particle layer 56 when a voltage is applied thereto. Accordingly, the particle 60 containing the first moiety 61 and the second moiety 62 having different dielectric constants can be moved appropriately in accordance with an electric field formed by the electrodes 41 and 42. As the particle 60 having a reflecting and diffusing function moves, a diffusing characteristic of the screen 40 is temporally changed, and speckles can be reduced sufficiently.

According to an example of the screen 40 of the present embodiment, the screen 40 includes the optical sheet 50 and the electrodes 41 and 42 that diffuse light. When a voltage is applied, the electrodes 41 and 42 form an electric field for driving the particle 60 in the particle layer 55. Accordingly, the diffusing sections 53 and 58 need not be additionally provided, and the optical sheet 50 can be configured as a thin film.

According to an example of the screen 40 of the present embodiment, the screen 40 includes the Fresnel lens 70 that refracts incident light and emits the light as parallel light. Accordingly, the screen 40 can be configured to be thin and light in weight.

According to an example of the screen 40 of the present embodiment, the Fresnel lens 70 includes the Fresnel lens 70a and a diffuse surface 70b provided on the opposite side of the Fresnel surface 70a. Accordingly, diffusibility can be improved.

According to an example of the screen 40 of the present embodiment, the screen 40 includes the viewing angle enlarging section 71 that enlarges a viewing angle by diffusing and emitting incident light. The viewing angle enlarging section 71 can enlarge a viewing angle formed by a trapezoidal prism in which a lower bottom lower than an upper bottom is formed on an incidence side.

According to an example of the screen 40 of the present embodiment, the screen 40 includes the light absorption section 71b that absorbs or attenuates natural light from an emission side of the viewing angle enlarging section 71. The light absorption section 71b is embedded between trapezoidal prisms. Accordingly, contrast can be improved.

According to an example of the screen 40 of the present embodiment, the screen 40 includes the viewing angle enlarging section 71 that enlarges a viewing angle by diffusing and emitting incident light. The viewing angle enlarging section 171 includes a lenticular lens 171a on which minute cylindrical lenses 171a₁ are arranged on an incidence side. Accordingly, a viewing angle can be enlarged.

According to an example of the screen 40 of the present embodiment, the screen 40 includes the light absorption section 171b that absorbs or attenuates natural light from an emission side of the viewing angle enlarging section 171. The light absorption section 171b is formed of a black stripe that is formed on a surface on an emission side. Accordingly, contrast can be improved.

According to an example of the screen 40 of the present embodiment, the viewing angle enlarging section 71 includes a microlens array, in which minute convex lenses or concave lenses are arranged on an incidence side. Accordingly, a viewing angle can be enlarged.

According to an example of the screen 40 of the present embodiment, the screen 40 includes the light absorption section that absorbs or attenuates natural light from an emission side of the viewing angle enlarging section. The light absorption section is formed of a pinhole array formed on a surface on an emission side. Accordingly, contrast can be improved.

According to an example of the screen 40 of the present embodiment, the screen 40 includes the light absorption section 271b that absorbs or attenuates natural light from an emission side of the viewing angle enlarging section 271. The light absorption section 271b is formed to cover a cylindrical lens or a convex lens. Accordingly, contrast can be improved.

According to an example of the screen 40 of the present embodiment, the screen 40 includes the colored section 72 that is semitransparent or colored on an emission side of the viewing angle enlarging section 71. Accordingly, contrast can be improved further.

According to an example of the display device 10 of the present embodiment, the display device 10 includes the screen 40 and the projector 20 that emits coherent light to the screen 40. Accordingly, speckles of the coherent light emitted from the projector 20 can be sufficiently reduced.

According to an example of the display device 10 of the present embodiment, the display device 10 further includes the power source 30 that applies a voltage to the electrodes 41 and 42 of the screen 40 and the control device 35 that controls a voltage applied to the electrodes 41 and 42 by the power source 30. The control device 35 controls the voltage applied from the power source 30 so as to move the particle 60 in the particle layer 55. Accordingly, the particle 60 can be moved more appropriately, and speckles can be reduced more sufficiently.

According to an example of the display device 10 of the present embodiment, the control device 35 controls a voltage applied from the power source 30 so as to repeatedly rotate the particle 60 within an angular range smaller than 180°. Accordingly, at least one of the first moiety 61 and the second moiety 62 can be selected and positioned appropriately on an observer side.

According to an example of the display device 10 of the present embodiment, the control device 35 controls at least one of a direction and a position of the particle 60 by a voltage applied from the power source 30 so that the first moiety 61 covers at least part of the second moiety 62 from an observer side along a normal line of the screen 40. Accordingly, even when the first moiety 61 and the second moiety 62 do not have exactly the same color, a change in the color tone of the screen 40 can effectively be made hardly perceivable while an image is displayed by moving the particle 60.

Descriptions have been made on the optical sheet 50, the screen 40, and the display device 10 by way of several embodiments. However, the present invention is not limited to the above embodiments, and a variety of combinations and variations are possible.

### Reference Signs List

10: Display device
20: Projector
21: Coherent light source
30: Power source
35: Control device
40: Screen
41: First electrode
42: Second electrode
46: First cover layer
47: Second cover layer
50: Optical sheet
51: First base material
52: Second base material
55: Particle layer
56: Holding section
56a: Cavity
57: Liquid
60: Particle
61: First moiety
66a: First main section
66b: First diffuse component
62: Second moiety
67a: Second main section
67b: Second diffuse component

## Claims

1. An optical sheet, comprising:
a particle layer having a first side and a second side facing each other, the particle layer including a holding section having a cavity and a particle that is contained in the cavity and includes a first polymer section and a second polymer section;
a first base material provided on the first side of the particle layer;
a second base material provided on the second side of the particle layer; and
a diffusing section provided on the second side of the particle layer.

2. The optical sheet according to claim 1, wherein
the diffusing section is provided between the second base material and the particle layer.

3. The optical sheet according to claim 1 or 2, wherein
the diffusing section includes a diffusing fine particle that diffuses light.

4. An optical sheet, comprising:
a particle layer having a first side and a second side facing each other, the particle layer including a holding section having a cavity and a particle that is contained in the cavity and includes a first polymer section and a second polymer section;
a first base material provided on the first side of the particle layer; and
a second base material provided on the second side of the particle layer, the second base material diffusing light.

5. The optical sheet according to claim 4, wherein
the second base material includes a diffusing fine particle that diffuses light.

6. The optical sheet according to any one of claims 1 to 5, wherein
a single one of the particle is contained in a single one of the cavity.

7. A screen, comprising:
the optical sheet according to any one of claims 1 to 6; and
an electrode that forms an electric field for driving the particle of the particle layer by being applied with a voltage.

8. A screen, comprising:
the optical sheet according to any one of claims 1 to 6; and
an electrode that diffuses light, the electrode forming an electric field for driving the particle of the particle layer by being applied with a voltage.

9. The screen according to claim 7 or 8, further comprising a Fresnel lens that refracts incident light and emits the light as parallel light.

10. The screen according to claim 9, wherein
the Fresnel lens has a Fresnel surface and a diffuse surface provided on an opposite side of the Fresnel surface.

11. The screen according to any one of claims 7 to 10, further comprising a viewing angle enlarging section that enlarges a viewing angle by diffusing and emitting incident light, wherein
the viewing angle enlarging section is formed by a trapezoidal prism in which a lower bottom longer than an upper bottom is formed on the incidence side.

12. The screen according to claim 11, further comprising a light absorption section that absorbs or attenuates natural light from the emission side of the viewing angle enlarging section, wherein
the light absorption section is embedded between the trapezoidal prisms.

13. The screen according to any one of claims 7 to 10, further comprising a viewing angle enlarging section that enlarges a viewing angle by diffusing and emitting incident light, wherein
the viewing angle enlarging section includes a lenticular lens on which minute cylindrical lenses are arranged on the incidence side.

14. The screen according to claim 13, further comprising a light absorption section that absorbs or attenuates natural light from the emission side of the viewing angle enlarging section, wherein
the light absorption section is formed of a black stripe that is formed on a surface on the emission side.

15. The screen according to any one of claims 7 to 10, wherein
the viewing angle enlarging section includes a microlens array in which minute convex lenses or concave lenses are arranged on the incidence side.

16. The screen according to claim 15, further comprising a light absorption section that absorbs or attenuates natural light from the emission side of the viewing angle enlarging section, wherein
the light absorption section is formed of a pinhole array that is formed on a surface on the emission side.

17. The screen according to claim 13 or 15, further comprising a light absorption section that absorbs or attenuates natural light from the emission side of the viewing angle enlarging section, wherein
the light absorption section is formed to cover the cylindrical lens or the concave lens.

18. The screen according to any one of claims 11 to 17, wherein
a colored section that is semitransparent or colored is included on the emission side of the viewing angle enlarging section.

19. A display device, comprising:
the screen according to any one of claims 1 to 18; and
a projector that emits coherent light to the screen.

20. The display device according to claim 19, further comprising:
a power source that applies a voltage to the electrode of the screen; and
a control device that controls a voltage applied to the electrode from the power source, wherein
the control device controls a voltage applied by the power source so as to move the particle in the particle layer.
